# EUROPÄISCHE PATENTANMELDUNG

(11) **EP 0 648 570 A1**
(43) Veröffentlichungstag der Anmeldung: **19.04.1995**
(21) Anmeldenummer: 94116210.9
(22) Anmeldetag: 14.10.1994
(51) Int. Cl.: B23K 9/26

(54) **Schweissvorrichtung**

(30) Priorität: 19.10.1993 DE 9315906 U
(71) Anmelder: Jung, Dieter, D-35418 Buseck (DE); Iversen, Klaus, D-51515 Kürten (DE)
(72) Erfinder: Jung, Dieter, D-35418 Buseck (DE); Iversen, Klaus, D-51515 Kürten (DE)
(74) Vertreter: Schlagwein, Udo, Dipl.-Ing.

(57) **Zusammenfassung**

Eine Schweißvorrichtung für das Schmelzschweißen von Werkstücken aus Leichtmetall unter atmosphärischen Bedingungen mittels eines Schweißzusatzmaterials in Form eines Schweißdrahtes (2) aus einem mit Bestandteilen der Atmosphäre leicht reagierenden Werkstoff hat eine Reinigungsvorrichtung (5) zum kontinuierlichen, mechanischen Abtragen einer dünnen Oberflächenschicht des Schweißdrahtes (2) unmittelbar vor dem Schweißen. Dadurch wird verhindert, daß mit dem Schweißdraht (2) Verunreinigungen, insbesondere Wasserstoff, zur Schweißschmelze gelangen kann.

## Beschreibung

Die Erfindung betrifft eine Schweißvorrichtung für das Schmelzschweißen von Werkstücken unter atmosphärischen Bedingungen mittels eines Schweißzusatzmaterials in Form eines Schweißdrahtes aus einem mit Bestandteilen der Atmosphäre leicht reagierenden Werkstoff.

Das Schmelzschweißen von Werkstücken aus Leichtmetall (Aluminium, Magnesium, sowie deren Legierungen, soweit diese schmelzschweißbar sind) mittels Schweißzusatzmaterial unter atmosphärischen Bedingungen bereitet Schwierigkeiten, wenn diese Werkstücke zum Schweißen nicht wirtschaftlich in trockene Kammern oder Räumen gebracht werden können und wenn nicht jede Schweißnaht in eine zum Schweißen günstige Position (waagerecht oder senkrecht) zu bringen ist. Das ist beispielsweise bei Kraftfahrzeug-Karosserien, großen Behältern oder Rohrleitungen der Fall.

Grundsätzlich ergeben sich beim Schweißen von Leichtmetallen gegenüber Stahl zusätzliche Probleme durch eine im Verhältnis zum Metall hochschmelzende Oxidhaut (Aluminium schmilzt zum Beispiel schon bei 660°C, Aluminiumoxid aber erst bei 2060°C), durch die starke Wärmeableitung, durch die große Wärmedehnung und durch die Neigung zu einer starken Wasserstoff-Porenbildung.

Die Vermeidung der Porenbildung stellt heute noch ein besonderes Problem dar. Wasserstoff in atomarer Form wird in der Schmelze im hohen Maße gelöst und scheidet sich bei der Erstarrung in molekularer Form aus, da sich die Löslichkeit bei Änderung des Aggregatzustandes beispielsweise bei Aluminium um das 20-fache ändert. Der molekulare Wasserstoff steigt beim Abkühlen der Schmelze nach oben, was besonders bei Überkopf-Positionen der Schweißung zur Porenbildung führt. Die Poren sind nicht nur wegen der verringerten Festigkeit der Schweißnaht unerwünscht, sondern sollen auch als offene Oberflächenporen wegen der späteren Lackierung, insbesondere bei Kraftfahrzeugteilen, vermieden werden.

Hierzu ist es wichtig, insbesondere beim Schweißen in Zwangslage die Wasserstoffzufuhr zur Schmelze zu vermeiden. Hierbei sind vier verschiedene Hauptwasserstoffquellen beim Leichtmetallschweißen mittels Schweißzusatzmaterials unter atmosphärischen Bedingungen zu berücksichtigen:
- Belag auf der Oberfläche des zu schweißenden Bereichs der Werkstücke,
- Feuchtigkeit im Schutzgas,
- Feuchte Umgebungsatmosphäre,
- mit Hydroxid angereicherte, oxydierte und/oder mit Fett oder Öl verschmutzte Oberfläche der Zusatzmaterialien.

Die vorliegende Erfindung geht von der Erkenntnis aus, daß nicht nur durch die zu verschweißenden Werkstücke, sondern besonders die in Form von Schweißdrähten vorliegenden Schweißzusatzmaterialien Verunreinigungen, insbesondere Wasserstoff, in die Schweißnaht einbringen. Das ist besonders gravierend, da Drähte ein großes Verhältnis von Oberfläche zu Volumen haben, so daß sich verhältnismäßig viele Verunreinigungen auf ein kleines Metallvolumen konzentrieren. Schweißmaterialien werden deshalb beim Hersteller mit besonderen Maschinen gereinigt und sofort anschließend feuchtigkeitsabweisend verpackt und an die verarbeitende Industrie ausgeliefert. Dort bemüht man sich, die Zusatzmaterialien möglichst trocken der Verpackung zu entnehmen und kurzfristig zu verarbeiten. Bei Unterbrechungen des Schweißbetriebs kann man die Zusatzmaterialien dem Schweißgerät entnehmen und sie wieder trocken lagern. Der Erfolg dieses Aufwands ist jedoch nur begrenzt. Deshalb verzichtet man in der Praxis meist aus Kostengründen auf eine solche Handhabung und schweißt nur Qualitätsprodukte in besonders klimatisierten Räumen oder Kammern, was jedoch bei großen Werkstücken aus wirtschaftlichen Gründen kaum durchführbar ist.

Der Erfindung liegt das Problem zugrunde, eine Schweißvorrichtung der eingangs genannten Art so auszubilden, daß sie unter üblichen, atmosphärischen Bedingungen benutzt werden kann, ohne daß sich auf der Oberfläche des Schweißzusatzmaterials gebildete Stoffe in die Schweißschmelze gelangen können.

Dieses Problem wird erfindungsgemäß dadurch gelöst, daß die Schweißvorrichtung eine Reinigungsvorrichtung zum kontinuierlichen, mechanischen Abtragen einer dünnen Oberflächenschicht des Schweißdrahtes unmittelbar vor dem Schweißen aufweist.

Bei einer solchen Schweißvorrichtung kann man es hinnehmen, daß sich unter der Luft eine hygroskopische Schicht, bei Aluminium zum Beispiel Aluminiumhydroxid, auf dem Schweißdraht bildet, da diese Schicht unmittelbar vor dem Schweißen entfernt wird und danach die Zeit nicht mehr ausreicht, um eine neue, für die Schweißqualität schädliche Schicht zu bilden. Die erfindungsgemäße Vorrichtung eignet sich insbesondere zum Schweißen von Werkstücken aus Aluminium, Magnesium oder Legierungen dieser Metalle nach folgenden Verfahren: MIG (Metall Inert Gas), WIG (Wolfram Inert Gas), Plasma, Laser, Elektronenstrahlschweißen ohne Vakuumkammer. Da der Einsatz von Leichtmetall anstelle von Stahl in letzter Zeit zunimmt, insbesondere wegen der damit verbundenen Gewichtsersparnis, der Vermeidung von Korrosion und der guten Wiederverwertbarkeit, hat die erfindungsgemäße Vorrichtung einen großen und zunehmenden Einsatzbereich.

Dank der Erfindung wird erstmalig und sicher die Hauptwasserstoffquelle beim Leichtmetallschweißen beseitigt. Ein Schweißen ist in normalen Werkstatträumen ohne Klimatisierung möglich. Das bisher bei jeder Unterbrechung des Schweißens notwendige Entfernen der Zusatzwerkstoffe aus dem Schweißgerät und das Zwischenlagern in trockenen Räumen entfällt. Die Fertigung der Zusatzdrähte beim Hersteller wird wesentlich wirtschaftlicher, da auch das beim Ziehen der Schweißdrähte verwendete Fett auf der Drahtoberfläche verbleiben kann. Weiterhin kann die feuchtigkeitsabweisende Verpackung für den Transport vom Hersteller zum Verbraucher und für die Zwischenlagerung eingespart werden.

Eine übliche Schweißvorrichtung, welche ein Drahtrichtwerk, ein Drahttriebwerk zur kontinuierlichen Schweißdrahtförderung und eine zum Schweißort führende Drahtführung hat, kann dadurch in eine erfindungsgemäße Schweißvorrichtung umgewandelt werden, daß die Reinigungsvorrichtung zwischen einer Drahtspule und der Drahtführung angeordnet ist.

Die Reinigungsvorrichtung kann sehr unterschiedlich gestaltet sein. Auch stärkere Schichten auf dem Schweißdraht lassen sich rasch und unmittelbar vor dem Schweißen entfernen, wenn gemäß einer anderen Weiterbildung der Erfindung die Reinigungsvorrichtung ein um den Schweißdraht rotierendes Werkzeug hat.

Alternativ ist es jedoch auch möglich, daß die Reinigungsvorrichtung zumindest eine Drahtbürste aufweist, durch die der Schweißdraht gezogen wird.

Besonders einfach wird eine Reinigungsvorrichtung mit einer solchen Drahtbürste, wenn sie den Schweißdraht ringförmig umschließt.

Eine weitere Möglichkeit der Ausbildung der Reinigungsvorrichtung besteht darin, daß die Reinigungsvorrichtung als Werkzeug eine Schälvorrichtung hat.

Durch praktische Versuche hat sich als besonders vorteilhaft eine Reinigungsvorrichtung erwiesen, die als Werkzeug zumindest eine rotierende Schleifscheibe aufweist.

Konstruktiv besonders einfach ist eine solche Reinigungsvorrichtung mit einer Schleifscheibe gestaltet, wenn sie einen mit einer hohlen Achse versehenen Rotor aufweist, durch die hindurch der Schweißdraht unverdrehbar zu einer Drahtführung nach dem Rotor geführt ist, und wenn am Rotor quer zur Drehachse des Rotors durch eine Schleifscheibenverstellung verstellbar ein Schleifaggregat mit der Schleifscheibe und einem Schleifscheibenantrieb angeordnet ist.

Einen besonders gleichmäßigen Schliff erhält man, wenn die Schleifscheibe topfförmig ausgebildet ist und ihre Stirnfläche zu dem zu schleifenden Schweißdraht weist.

Der Schweißdraht weicht beim Schleifen nicht dem Schleifdruck aus und gerät dabei nicht in Schwingungen, wenn gemäß einer anderen Weiterbildung der Erfindung am Rotor gegenüber der Stirnfläche der Schleifscheibe eine ebenfalls quer zur Drehachse des Rotors durch eine Zustelleinrichtung verstellbare, den Schweißdraht beim Schleifen abstützende Drahtstütze mit einer Drahtaufnahmenut angeordnet ist.

Ein infolge von Toleranzen auftretender Winkelversatz zwischen der Ebene der Stirnfläche der Schleifscheibe und der Richtung des durch den Rotor geführten Schweißdrahtes kann ohne Schwierigkeiten hingenommen werden, wenn die Drahtstütze um eine quer zur Drehachse des Rotors und der Schleifscheibe verlaufende Achse schwenkbar mit dem Rotor verbunden ist.

Der Schweißdraht verklemmt sich durch die auf ihn drükkende Schleifscheibe nicht in der Drahtstütze und bewegt sich auch nicht seitlich aus ihr heraus, wenn die Drahtaufnahmenut im Querschnitt rechteckig ist.

Eine genaue Einstellung des erforderlichen Schleifdruckes ist möglich, ohne daß hierzu die Reinigungsvorrichtung mit unerwünscht hoher Präzision gefertigt sein muß, wenn die Schleifscheibenverstellung zur Grobeinstellung und die Zustelleinrichtung der Drahtstütze zur Feineinstellung der Schleifleistung ausgebildet ist.

Die Erfindung läßt zahlreiche Ausführungsformen zu. Zur weiteren Verdeutlichung ihres Grundprinzips sind zwei davon schematisch in der Zeichnung dargestellt und werden nachfolgend beschrieben. Diese zeigt in
- Fig.1: eine Seitenansicht einer Schweißvorrichtung gemäß der Erfindung,
- Fig.2: eine Seitenansicht einer Reinigungsvorrichtung gemäß der Erfindung,
- Fig.3: eine Vorderansicht der Reinigungsvorrichtung nach Figur 2.

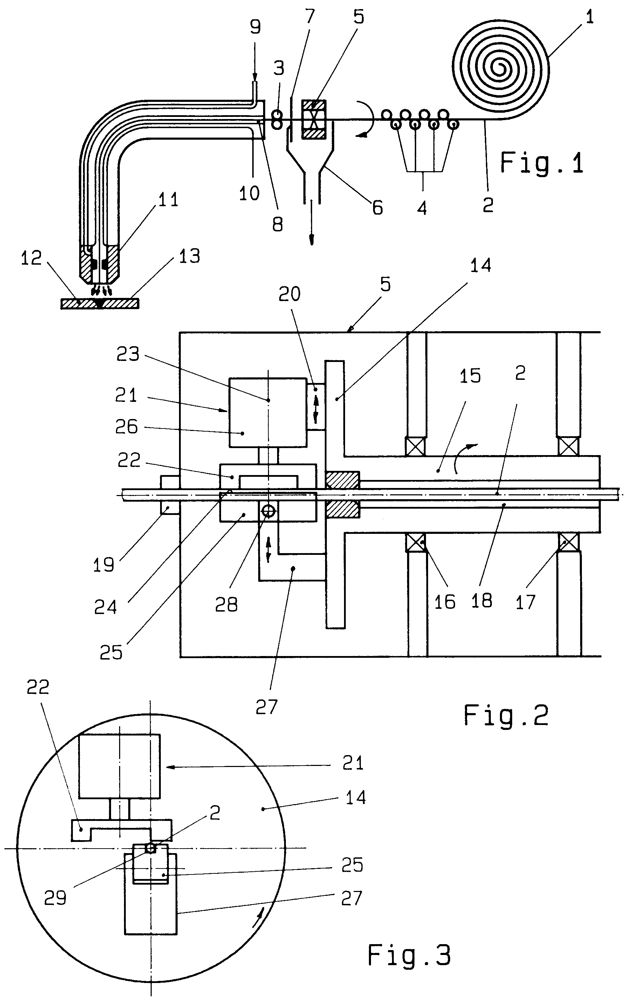

Die Figur 1 zeigt eine Drahtspule 1, von der Schweißdraht 2 von einem Rollenpaar 3 angetrieben durch ein mit mehreren, in einer oder mehreren verschiedenen Ebenen angeordneten Rollen versehenen Drahtrichtwerk 4 gezogen und dabei gerade gerichtet wird. Hinter dem Drahtrichtwerk 4 durchläuft der Schweißdraht 2 eine Reinigungsvorrichtung 5, wo der Schweißdraht 2 durch mechanisches Abtragen einer dünnen Oberflächenschicht gereinigt wird und die eine Absaugung 6 für die von der Oberfläche des Schweißdrahtes 2 entfernte Späne und Verunreinigungen hat. Von dort wird der Schweißdraht 2 durch einen Abstreifer 7 geführt, um eventuell noch anhaftende Späne zu entfernen, und danach einer Drahtführung 8 mit einer dazu parallelen Schutzgaszuführung 9 und einer Stromzufuhr 10 und einem Brenner 11 zugeführt, mit dem zwei Werkstücke 12, 13 am Schweißort miteinander verschweißt werden. Es handelt sich bei der Schweißvorrichtung also um eine MIG-Schweißvorrichtung.

Die Figur 2 zeigt eine Reinigungsvorrichtung 5, welche einen Rotor 14 mit einer hohlen Achse 15 hat. Die Achse 15 ist mittels zweier Lager 16, 17 drehbar gelagert und hat eine durchgehende Bohrung 18, durch welche der Schweißdraht 2 zu einer Drahtführung 19 führt. Der Rotor 14 hat in Figur 2 gesehen auf seiner linken Stirnfläche eine Schleifscheibenverstellung 20 mit einem einen Schleifscheibenantrieb 26 aufweisenden Schleifaggregat 21, welches eine topfförmige Schleifscheibe 22 hat, die um eine quer zu dem Schweißdraht 2 verlaufende Achse 23 rotiert.

Zum Schleifen des Schweißdrahtes 2 liegt die Schleifscheibe 22 mit ihrer Stirnfläche 24 gegen den Schweißdraht 2 an. Damit er dabei nicht weggedrückt wird, ist er in einer Drahtstütze 25 geführt, die mittels einer Zustelleinrichtung 27 quer zum Schweißdraht 2 und in Richtung der Achse 23 des Schleifaggregates 21 verstellt werden kann. Die Drahtstütze 25 ist um eine Achse 28 pendelnd mit der Zustelleinrichtung 27 verbunden. Diese Achse 28 verläuft quer zum Schweißdraht 2 und quer zur Achse 23 des Schleifaggregates 21.

Die Figur 3 läßt erkennen, daß die Drahtstütze 25 eine im Querschnitt rechteckige Drahtaufnahmenut 29 hat, durch die der Schweißdraht 2 geführt wird, um von der Schleifscheibe 22 geschliffen zu werden. Diese rotiert beim Schleifen mit dem Rotor 14 und der Drahtstütze 25 um den sich nicht drehenden Schweißdraht 22 herum. Zum Einstellen der Reinigungsvorrichtung 5 stellt man zunächst die Schleifscheibe 22 grob und dann die Drahtstütze 25 genau ein, wobei man den Schweißdraht 2 geringfügig zur Schleifscheibe 22 hin verbiegt, was sich als vorteilhaft erwiesen hat.

### Bezugszeichenliste

- 1: Drahtspule
- 2: Schweißdraht
- 3: Rollenpaar
- 4: Drahtrichtwerk
- 5: Reinigungsvorrichtung
- 6: Absaugung
- 7: Abstreifer
- 8: Drahtführung
- 9: Schutzgaszufuhr
- 10: Stromzufuhr
- 11: Brenner
- 12: Werkstück
- 13: Werkstück
- 14: Rotor
- 15: Achse
- 16: Lager
- 17: Lager
- 18: Bohrung
- 19: Drahtführung
- 20: Schleifscheibenverstellung
- 21: Schleifaggregat
- 22: Schleifscheibe
- 23: Achse
- 24: Stirnfläche
- 25: Drahtstütze
- 26: Schleifscheibenantrieb
- 27: Zustelleinrichtung
- 28: Achse
- 29: Drahtaufnahmenut

## Patentansprüche

1. Schweißvorrichtung für das Schmelzschweißen von Werkstücken unter atmosphärischen Bedingungen mittels eines Schweißzusatzmaterials in Form eines Schweißdrahtes (2) aus einem mit Bestandteilen der Atmosphäre leicht reagierenden Werkstoff, **dadurch gekennzeichnet**, daß die Schweißvorrichtung eine Reinigungsvorrichtung (5) zum kontinuierlichen, mechanischen Abtragen einer dünnen Oberflächenschicht des Schweißdrahtes (2) unmittelbar vor dem Schweißen aufweist.

2. Schweißvorrichtung nach Anspruch 1, welche ein Drahtrichtwerk, ein Drahttriebwerk zur kontinuierlichen Schweißdrahtförderung und eine zum Schweißort führende Drahtführung hat, **dadurch gekennzeichnet**, daß die Reinigungsvorrichtung (5) zwischen einer Drahtspule (1) und der Drahtführung (8) angeordnet ist.

3. Schweißvorrichtung nach den Ansprüchen 1 oder 2, **dadurch gekennzeichnet**, daß die Reinigungsvorrichtung (5) ein um den Schweißdraht (2) rotierendes Werkzeug hat.

4. Schweißvorrichtung nach den Ansprüchen 1 oder 2, **dadurch gekennzeichnet**, daß die Reinigungsvorrichtung (5) zumindest eine Drahtbürste aufweist, durch die der Schweißdraht (2) gezogen wird.

5. Schweißvorrichtung nach Anspruch 4, **dadurch gekennzeichnet**, daß die Drahtbürste den Schweißdraht (2) ringförmig umschließt.

6. Schweißvorrichtung nach Anspruch 3, **dadurch gekennzeichnet**, daß die Reinigungsvorrichtung (5) als Werkzeug eine Schälvorrichtung hat.

7. Schweißvorrichtung nach Anspruch 3, **dadurch gekennzeichnet**, daß die Reinigungsvorrichtung (5) als Werkzeug zumindest eine rotierende Schleifscheibe (22) aufweist.

8. Schweißvorrichtung nach Anspruch 3, **dadurch gekennzeichnet**, daß die Reinigungsvorrichtung (5) einen mit einer hohlen Achse (15) versehenen Rotor (14) aufweist, durch die hindurch der Schweißdraht (2) unverdrehbar zu einer Drahtführung (19) nach dem Rotor (14) geführt ist, und daß am Rotor (14) quer zur Drehachse des Rotors (14) durch eine Schleifscheibenverstellung (20) verstellbar ein Schleifaggregat (21) mit der Schleifscheibe (22) und einem Schleifscheibenantrieb (26) angeordnet ist.

9. Schweißvorrichtung nach Anspruch 9, **dadurch gekennzeichnet**, daß die Schleifscheibe (22) topfförmig ausgebildet ist und ihre Stirnfläche (24) zu dem zu schleifenden Schweißdraht (2) weist.

10. Schweißvorrichtung nach zumindest einem der vorangehenden Ansprüche, **dadurch gekennzeichnet**, daß am Rotor (14) gegenüber der Stirnfläche (24) der Schleifscheibe (22) eine ebenfalls quer zur Drehachse des Rotors (14) durch eine Zustelleinrichtung (27) verstellbare, den Schweißdraht (2) beim Schleifen abstützende Drahtstütze (25) mit einer den Schweißdraht (2) führenden Drahtaufnahmenut (29) angeordnet ist.

11. Schweißvorrichtung nach Anspruch 11, **dadurch gekennzeichnet**, daß die Drahtstütze (25) um eine quer zur Drehachse des Rotors (14) und der Schleifscheibe (22) verlaufende Achse (28) schwenkbar mit dem Rotor (14) verbunden ist.

12. Schweißvorrichtung nach zumindest einem der vorangehenden Ansprüche, **dadurch gekennzeichnet**, daß die Drahtaufnahmenut (29) im Querschnitt rechteckig ist.

13. Schweißvorrichtung nach zumindest einem der vorangehenden Ansprüche, **dadurch gekennzeichnet**, daß die Schleifscheibenverstellung (20) zur Grobeinstellung und die Zustelleinrichtung (27) der Drahtstütze (25) zur Feineinstellung der Schleifleistung ausgebildet ist.
